# EUROPEAN PATENT APPLICATION

(11) **EP 0 602 779 A2**
(43) Date of publication of application: **22.06.1994**
(21) Application number: 93308340.4
(22) Date of filing: 20.10.1993
(51) Int. Cl.: H04M 15/00, H04M 3/42, H04Q 7/04

(54) **Wireless personalized communications system**

(30) Priority: 30.10.1992 US 968988
(71) Applicant: AT&T Corp., New York, NY 10013-2412 (US)
(72) Inventor: Kolipakam, Murthy, East Brunswick, New Jersey 08816 (US); Wyatt, George Yorke, Howell, New Jersey 07731 (US)
(74) Representative: Buckley, Christopher Simon Thirsk

(57) **Abstract**

A facility is provided for allowing a subscriber (25) of wireless communications services (in 100) to associate his/her subscription of features provided by that system with a wired communications system (50, 75, 200, 250, 300). Accordingly, then, the subscriber may place a telephone call via the latter system as though the call were being placed via the former system.

## Description

### Technical Field

The invention relates to a wireless personal communications system.

### Background of the Invention

Recently, much attention has been directed to providing wireless telephone communications to a person that is highly mobile. Briefly, a wireless personal telephone uses a channel of a wireless radio carrier to establish a telephone call connection between a subscriber's wireless telephone terminal and a base station. A telephone connection is then extended from the base station to the called station via a Mobile Telephone Switching Office (MTSO). An opposite connection is established when a telephone call is placed to the wireless telephone terminal. Such connections are established in part in accord with a profile associated with the wireless telephone terminal. Each wireless telephone terminal, and thus the associated subscriber, is associated with a profile which may include, inter alia, (a) the identity of the associated subscriber, (b) an authentication code, e.g., personal identification number (PIN), (c) identity of the associated wireless terminal station, and (d) billing information. It may also include a set of parameters defining respective enchanced calling services, if any.

### Summary of the Invention

We have recognized that, in accord with an aspect of the invention, a wired communications system may be readily adapted to allow a wireless communications system subscriber to associate his/her system profile with a conventional wired telephone station set so that telephone calls originating from or terminating at that station set may be processed and/or billed in accord with the subscriber's wireless system profile. Advantageously, then, such a subscriber may place a call via a wired telephone system just as though the call were being placed via the subscriber's associated wireless communications system. As one aspect of the invention, the association between the subscriber's profile and the aforementioned station set may be established on a call-by-call basis, so that subsequent calls placed from that telephone station set are not billed to the subscriber's profile.

### Brief Description of the Drawing

In the FIGs.:
FIG. 1 is a broad block diagram of a telecommunications system in which the principles of the invention may be practiced;
FIG. 2 is an illustrative example of a subscriber profile that is stored in the database of FIG. 1; and
FIGs. 3 and 4 constitute a flowchart of a program which implements the invention in a communications switch in the system of FIG. 1.

### Detailed Description

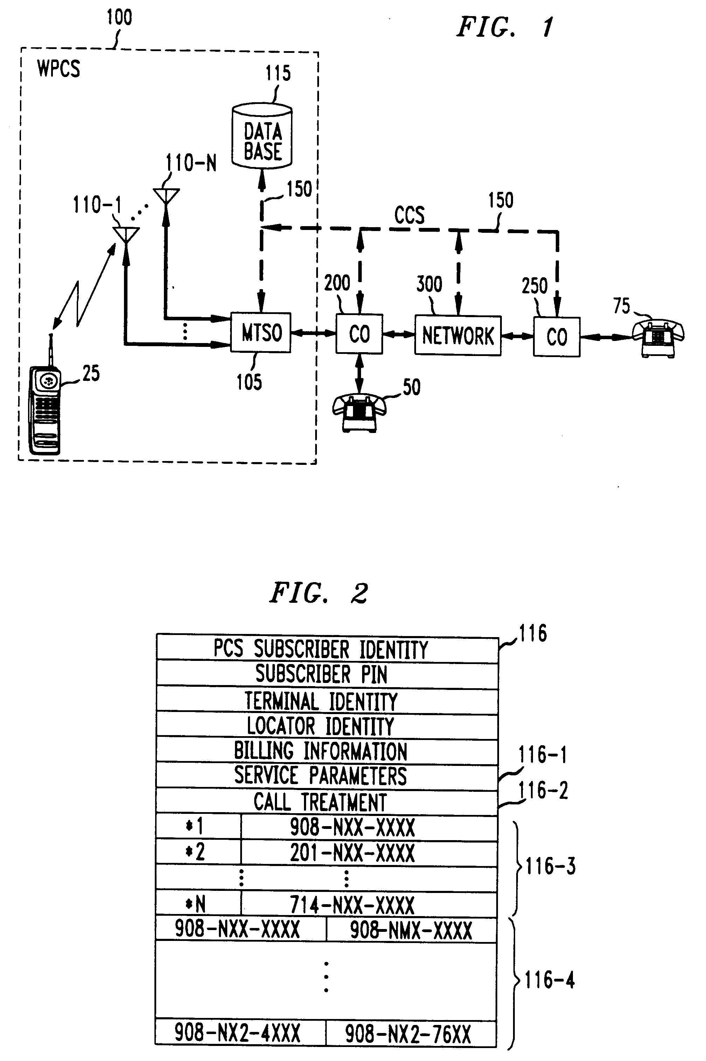

Referring first to FIG. 1, Wireless Personal Communications System (WPCS) 100 includes a plurality of base stations 110-1 through 110-N which provide a wireless interface between a portable WPCS station set, e.g., WPCS terminal 25, and Mobile Telephone Switching Office (MTSO) 105. WPCS terminal 25, more particularly, monitors a predetermined call-setup channel which serves as a link to one of the base stations, e.g., base station 110-1, and, in response to a request entered by the associated subscriber to place a call, locks onto the call-setup channel when it becomes available. At that point, terminal 25 transmits its identity over the call set-up channel as a way of requesting service. Base station 110-1, operating in a conventional manner and in conjunction with MTSO 105, validates the received identity as a result of obtaining a WPCS service profile associated with the received identity from database 115 via conventional Common Channel Signaling (CCS) network 150. Assuming that the received identity is valid, then station 25 is assigned a particular channel and instructed to tune to that channel. Base station 110-1 then establishes a connection to an associated telephone network through MTSO 105. MTSO 105 then passes the digits forming the called telephone number and dialed by the associated station 25 subscriber to Central Office (CO) 200. If the telephone call happens to be a long distance telephone call, then CO 200 establishes a telephone connection via network 300 to the called telephone station set, which may be either a conventional station set, e.g., station 50 or 75, or another WPCS wireless terminal (not shown). In addition, MTSO 105 prepares a conventional billing record to track the charges for the associated call and includes in the record the (a) billing information contained in the associated profile, (b) called telephone number and (c) identity of the calling WPCS terminal. When the associated call is terminated, then MTSO stores the start and end times of the call in the associated billing record and then supplies the record to database 115 via CCS 150 for storage therein.

As mentioned above, a WPCS subscriber may also subscribe to one or more enhanced services, e.g., call waiting, speed dialing, call forwarding, etc. Accordingly, the aforementioned digits that the terminal 25 subscriber enters could be a speed dialing code, e.g., *5, representing a particular telephone number. If that is the case and the subscriber is entitled to use that service, then MTSO 105 checks to see if the entered code and the telephone number it represents is contained in the associated profile. If it is, then MTSO 105 passes that telephone number as the called telephone number to CO 200. Alternatively, the terminal 25 subscriber may invoke a different enhanced service by entering via terminal 25 a code identifying that service.

In accord with the invention, the terminal 25 subscriber may also invoke such services from a conventional telephone station set, e.g., station 50, by causing the profile data defining the subscriber's personalized set of enhanced WPCS services and billing information to be stored temporarily in CO 200 in association with station 50. More particularly, to use such features at station set 50, or some other station set, e.g., station 75, the WPCS subscriber enters a special code, e.g., *PCS, via station 50 as well as the identity of the associated WPCS terminal and associated Personal Identification Number (PIN). CO 200 using the received terminal identity accesses database 115 via CCS network 150 to retrieve a copy of the subscriber's profile. In an illustrative embodiment of the invention, the data forming the profile includes a data word defining the subscriber's subscription of enhanced services as well as data defining speed dialing codes and associated telephone numbers. An illustrative layout of the data forming the subscriber's WPCS profile is shown in FIG. 2.

Specifically, the subscriber profile includes, inter alia, the (a) subscriber's identity, which may be, for example, a telephone number, (b) subscriber PIN, which may be, for example, a series of numbers, e.g., five numbers, selected by the subscriber, (c) identity of the subscriber's associated PCS terminal, which may be, for example, another series of numbers, and (d) conventional billing information. The profile also includes a service parameters field 116-1 and call treatment field 116-2.

Field 116-1, more particularly, defines the associated subscription of enhanced services or features and is a bit oriented field in which the position of a bit in the field and its value is used to indicate whether the associated subscriber has subscribed to a particular feature. For example, assuming that the subscriber has subscribed to speed calling, then a particular bit location in field 116-1 is turned "on", i.e., set to a particular binary value, e.g., a one. In addition, the speed dialing codes and corresponding telephone numbers associated with that feature are appended to the subscriber's profile, as illustrated by the block of fields 116-3. If the subscriber has also subscribed to other features, e.g., call forwarding, call waiting, call treatment, etc., then other bits in field 116-1 that are associated with those features are also tuned on.

Assuming that the subscriber has also subscribed to the call treatment feature, then the subscriber may specify a particular call treatment that should be applied to a particular incoming call, in which the call treatment is defined in block 116-4 of the associated profile. For example, such a treatment may specify that an incoming call associated with a particular telephone number, for example, 908-NXX-XXXX, is to be redirected to another telephone, for example, 908-NMX-XXXX, in which the other telephone number may be associated with, for example, the subscriber's answering service.

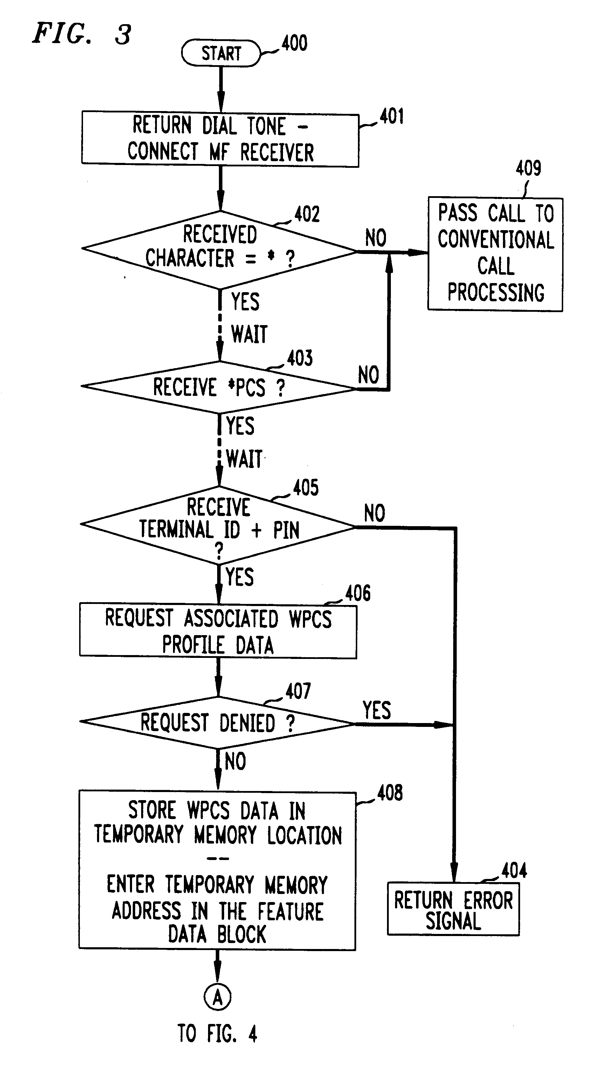

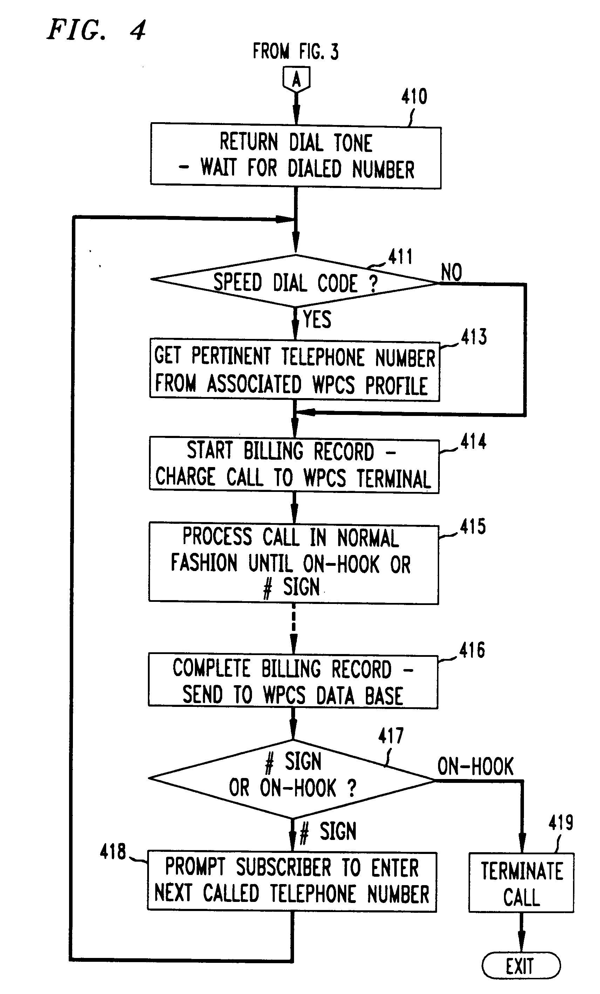

Referring now to FIGs. 3 and 4, the program which implements the invention is entered at an associated communications switch, e.g., CO 200, (FIG. 1), in response to detecting that a station, e.g., station 50, has gone off-hook. Upon being so entered, the program proceeds via block 400 to block 401 where it returns dial tone to station 50 and connects a conventional dual-tone-multifrequency (DTMF) receiver to the telephone line extending to station 50. The program then waits for the entry and receipt of DTMF signals from station 50. Upon receipt of such signals, the program proceeds to block 402 where it checks to see if the received signals includes the star (*) sign character as the first digit. If that is not the case, then the program proceeds to block 409 where it passes the call to a conventional call processing program and then exits. Otherwise, the program waits to see if the caller enters a request to associate his/her WPCS profile with the calling station set and proceeds to block 403 upon receipt of DTMF signals which might be indicative of such a request. At block 403, the program checks the last received DTMF signals to determine if they are indicative of the aforementioned request and proceeds to block 405 if it finds that to be the case. Otherwise, the program proceeds to block 409. At block 405, the program waits for receipt of DTMF signals identifying the caller's WPCS terminal and PCS PIN. If the program does not receive such signals, then it proceeds to block 404 where it returns an error signal to station 50. Otherwise, the program proceeds to block 406 where it forms a message including, inter alia, the terminal identity value, received PIN and a request requesting a copy of the caller's WPCS profile and sends the request to database 115 via CCS network 150. The program then proceeds to block 407 where it waits for the receipt of an answer from database 115. Database 115, in turn, unloads the identified profile from its associated memory and compares the PIN value contained in the profile with the PIN value contained in the received request. If the PINs compare, then database 115 returns a copy of the profile to the requester. Otherwise, it returns a request denied message.

Upon receipt of the database 115 answer, the program proceeds to block 404 if it finds that the answer is a denial of its requests. Otherwise, the program proceeds to block 408 where it stores the received WPCS profile in a memory location that is temporarily assigned to the profile and stores the address of that location in a conventional feature data block. The program then proceeds to block 410 (FIG. 4) where it returns dial tone as a way of indicating that the requested function has been completed successfully and to offer the caller the opportunity to place a telephone call.

In particular, when the WPCS subscriber enters a telephone number or speed dialing code in response to the dial tone, then the program proceeds to block 411 and thence to block 413 if it finds that the subscriber entered a speed dial code or to block 414 if it finds that entry is a telephone number. At block 413, the program unloads the telephone number represented by the entered speed code from the associated WPCS data profile and then proceeds to block 414. At block 414, the program prepares a billing record based on the billing information contained in the associated PCS profile (as discussed above) so that the call may be charged to the subscriber's WPCS terminal, rather than to the station set from which the subscriber is calling. The program then proceeds to block 415 where it routes (processes) the call in a conventional manner and then exits. The program is thereafter reentered at block 416 in response to the subscriber terminating the call. In particular, the program completes the associated billing record and then sends the record to database 115 (FIG. 1) for storage therein. The program (block 417) then proceeds to either block 418 or 419 based on whether the subscriber terminated the call by going "on-hook" or by entering a pound (#) sign to indicate that he/she desires to place another call, respectively. At block 419, the program terminates the call in a conventional fashion and erases the associated WPCS profile from its associated memory. Thus, a WPCS profile is associated with the wired telephone system only for the current session of telephone calls.

At block 418, the program prompts the subscriber to enter the next called telephone number that he/she desires to call. When the subscriber does so, the program proceeds to block 411 upon receipt thereof and processes the entered number in the manner discussed above.

The foregoing is merely illustrative of the principles of the invention. Those skilled in the art will be able to devise numerous arrangements, which, although not explicitly shown or described herein, nevertheless embody those principles that are within the spirit and scope of the invention. For example, the program of FIGs. 3 and 4 may be readily adapted so that a PCS subscriber's profile may be associated with a wired telephone station set for a predetermined period of time, for example, twenty-four hours.

As another example, the program may be arranged soit stores the PCS subscriber's profile in memory for a predetermined period of time, for example, 24 hours, after acquiring the profile from database 115. Thereafter, when the PCS subscriber enters a request for wireless telephone service via a wired station set, e.g., station 50, by entering the aforementioned code, e.g., *PCS, then the program first checks its associated memory to see if it has a copy of the subscriber's associated WPCS profile stored therein. If the program finds that to be the case, then it may compare the subscriber's entered PIN with the PIN contained in the stored profile. If the PINs match, then the program may proceed accordingly, thereby saving the steps of acquiring the profile from database 115. In fact, the program may be further arranged so that it restarts the aforementioned predetermined period of time whenever the WPCS subscriber requests such service and the program finds that the subscriber's profile is stored in its associated memory.

## Claims

1. A method of processing a call originating from a telephone station set associated with a wired telephone system, said call being placed by a caller associated with a wireless communications system in which a data profile defines said caller's subscription of particular wireless communications system calling features, said method CHARACTERIZED BY the step of
providing said calling features to said telephone station set.

2. A method of processing a call originating from a telephone station set associated with a wired telephone system, said call being placed by a caller associated with a wireless communications system, said method comprising the steps of
in said wireless communications system, associating said caller with a respective data profile defining said caller's subscription of enhanced calling features, and CHARACTERIZED BY
when said caller places a call via said telephone station set then associating said data profile with said telephone station set.

3. The method set forth in claim 2 wherein said step of associating said data profile with said telephone station set is FURTHER CHARACTERIZED BY the steps of
receiving, at a central office associated with said telephone station set, signals indicative of a request to associate said profile with said telephone station set and signals indicative of an identifier associated with said caller,
retrieving said profile from a database associated with said wireless communication system as a function of said identifier and storing said profile in memory associated with said central office,
processing calls originating from said telephone station set in accordance with the data forming said profile as long as said telephone station set remains off-hook, and
billing each of said calls to a wireless telephone terminal associated with said caller rather than to said telephone station set.

4. The method set forth in claim 2 FURTHER CHARACTERIZED BY the step of discarding said profile responsive to said telephone station going from an off-hook state to an on-hook state.

5. The method set forth in claim 2 FURTHER CHARACTERIZED IN THAT said profile data includes data defining at least speed dialing codes and corresponding telephone numbers.
